# EUROPÄISCHE PATENTSCHRIFT

(11) **EP 3 081 114 B1**
(45) Veröffentlichungstag und Bekanntmachung des Hinweises auf die Patenterteilung: **12.12.2018**
(21) Anmeldenummer: 16158412.3
(22) Anmeldetag: 03.03.2016
(51) Int. Cl.: A47C 7/00, B60B 33/00

(54) **PERMANENT GEBREMSTE ROLLENVORRICHTUNG FÜR EIN SITZ-, LIEGE- UND/ODER TRANSPORTMÖBEL, UND EIN SITZ-, LIEGE- UND/ODER TRANSPORTMÖBEL**
PERMANENTLY BRAKED ROLLER DEVICE FOR A PIECE OF FURNITURE USED FOR SITTING, LYING AND/OR TRANSPORT, AND A PIECE OF FURNITURE USED FOR SITTING, LYING AND/OR TRANSPORT
ROULEAUX FREINES EN PERMANENCE POUR SIÈGE, CHAISE LONGUE ET/OU CHARIOT ET SIÈGE, CHAISE LONGUE ET/OU CHARIOT

(30) Priorität: 15.04.2015 DE 102015206766
(43) Veröffentlichungstag der Anmeldung: 19.10.2016
(73) Patentinhaber: Sedus Stoll AG, 79761 Waldshut (DE)
(72) Erfinder: DONNER, Siegfried, 79761 Waldshut-Tiengen (DE); MAIER, Klaus, 79875 Dachsberg (DE); VOGELBACHER, Thomas, 88697 Bermatingen-Neuhausen (DE)
(74) Vertreter: Isarpatent

(56) Entgegenhaltungen:
- DE-A1- 2 641 272
- JP-A- 2011 031 724

## Beschreibung

### GEBIET DER ERFINDUNG

Die vorliegende Erfindung betrifft eine Rollenvorrichtung für ein rollbares Sitz-, Liege- und/oder Transportmöbel, sowie ein rollbares Sitz-, Liege- und/oder Transportmöbel. Dazu gehören Sitzmöbel, wie eine rollbare Couch bzw. Sofa oder ein rollbarer Stuhl, insbesondere ein rollbarer Hochstuhl usw.. Des Weiteren gehören rollbare Liegemöbel, wie z.B. ein rollbares Bett oder eine rollbare Schlafcouch usw., sowie ein rollbares Transportmöbel, wie beispielsweise ein Rollwagen oder ein Rollgestell usw., dazu.

### TECHNISCHER HINTERGRUND

Allgemein sind Sitzmöbel, wie Stühle, Sofas usw., sowie Liegemöbel, wie z.B. Betten, bekannt, welche rollbar ausgebildet sind und hierzu an ihrer Unterseite mit Rollen versehen sind.

Insbesondere werden als Sitzmöbel für einen beispielsweise erhöhten Arbeitsplatz Hochstühle oder sog. Counterstühle verwendet. Ein Hochstuhl oder Counterstuhl ist dabei ein Stuhl, insbesondere Drehstuhl, welcher eine erhöhte Sitzfläche aufweist und dem entsprechend mit einer Aufstiegshilfe versehen ist. Dabei können derartige Hochstühle mit belasteten gebremsten Rollen versehen sein, welche ausschließlich im belasteten Zustand bremsen.

Ein Beispiel für einen rollbaren Hochstuhl ist aus der DE 10 2008 009 413 A1 bekannt. Darin ist ein Hochstuhl offenbart, welcher einen Stuhlfuß mit einer Standvorrichtung aufweist, die zumindest drei Arme hat. Die Arme sind mit ihrem einen Ende an einer säulenförmigen Sitzhalterung befestigt und weisen an ihrem anderen Ende jeweils eine Rolle auf, mit welcher die Standvorrichtung auf einer Standfläche steht. Des Weiteren weist der Stuhlfuß eine Betätigungsvorrichtung auf, welche gleichzeitig als Aufstiegshilfe und Fußaufstandsfläche dient. Diese Betätigungsvorrichtung ist über parallel zur säulenförmigen Sitzhalterung verlaufende Führungselemente mit einem Stopper verbunden. Die Aufstiegshilfe, die Führungselemente sowie der Stopper bilden eine Bremsvorrichtung. Die Bremsvorrichtung ist in Richtung parallel zur Achse der Säule beweglich, so dass bei Belastung der Fußstandsfläche der Stopper gegen die Standfläche drückbar ist. Zur Verbesserung der Standsicherheit weist eine Kontaktfläche des Stoppers mit der Standfläche ein Material mit besonders hohem Reibwert auf.

Des Weiteren ist in der JP 2011 031724 A ein Buggy offenbart, welcher insgesamt vier Doppelräder aufweist. Jedes Rad dieser vier Doppelräder ist auf einer gemeinsamen Welle gelagert, die an einem Ende einen Absatz und an dem anderen Ende einen Gewindeabschnitt zum Befestigen einer Schraube aufweist. Auf der Welle zwischen den beiden Rädern ist eine Hohlwelle mit einem Aufnahmeaufsatz zu Aufnahme und Befestigung von Halterungsstangen des Buggys vorgesehen. Des Weiteren ist zwischen dem rechten Ende der Hohlwelle und dem rechten Rad eine Hülse und zwischen dem linken Ende der Hohlwelle und dem linken Rad eine Federung als Dämpfung vorgesehen.

### ZUSAMMENFASSUNG DER ERFINDUNG

Vor diesem Hintergrund liegt der vorliegenden Erfindung die Aufgabe zugrunde, eine verbesserte Rollenvorrichtung für ein Sitz- und/oder Liegemöbel bereitzustellen.

Erfindungsgemäß wird diese Aufgabe durch eine Rollenvorrichtung mit den Merkmalen des Patentanspruchs 1 und ein rollbares Sitz-, Liege und/oder Transportmöbel mit den Merkmalen des Patentanspruchs 13 gelöst.

### Demgemäß ist vorgesehen:

Eine permanent gebremste Rollenvorrichtung für ein rollbares Sitz-, Liege und/oder Transportmöbel, insbesondere einen Stuhl, wobei die Rollenvorrichtung aufweist:
zwei Rollen, die über eine gemeinsame Welle miteinander verbunden sind, wobei die jeweilige Rolle eine Radnabe aufweist, ein Gehäuse mit einer Lagerbuchse, in welchem die Welle drehbar gelagert ist, wobei eine axial wirkende Bremseinrichtung und/oder eine radial wirkende Bremseinrichtung an dem Gehäuse befestigt ist und mit der Rolle permanent in Reibkontakt ist zum permanenten Bremsen der Rollenvorrichtung, wobei das Gehäuse eine Rollenaufnahme aufweist mit wenigstens einem Rastabschnitt, wobei in die Rollenaufnahme die Radnabe an dem wenigstens einen Rastabschnitt einrastbar oder einclipsbar ist.

Die Rollenvorrichtung hat den Vorteil, dass das rollbare Sitz-, Liege und/oder Transportmöbel einerseits nicht ungewollt wegrollen kann, da es stets gebremst wird. Andererseits kann aber bei einer Überwindung der Reibkraft der Bremseinrichtung oder Bremseinrichtungen, das Sitz-, Liege und/oder Transportmöbel bewegt werden kann. Auf diese Weise kann z.B. ein Hochstuhl, als Beispiel für ein rollbares Sitz-, Liege und/oder Transportmöbel, nicht ungewollt wegrollen, wenn ein Benutzer auf den Hochstuhl steigt. Anderseits kann der Benutzer aber den Hochstuhl, wenn er auf ihm sitzt, bewegen, ohne jedoch unkontrolliert wegzurollen, durch die permanent gebremste Rollenvorrichtung. Dadurch kann der Benutzer sich zusammen mit seinem Hochstuhl beispielsweise zu seiner erhöhten Arbeitsfläche hin oder von dieser weg bewegen.

Die der vorliegenden Erfindung zugrunde liegende Erkenntnis/Idee besteht darin, dass die Rollenvorrichtung und ihre Rollen bewegbar sind, wenn eine Kraft auf die Rollenvorrichtung und ihre Rollen aufgebracht wird die größer ist als die durch den Reibkontakt zwischen der Bremseinrichtung oder den Bremseinrichtungen und der Rolle erzeugten Haftreibung. Des Weiteren wird die jeweilige Rolle auch beim Bewegen der Rolle gebremst, da eine Gleitreibung zwischen der Rolle und der jeweiligen Bremseinrichtung hierbei entsteht.

Vorteilhafte Ausgestaltungen und Weiterbildungen ergeben sich aus den weiteren Unteransprüchen sowie aus der Beschreibung unter Bezugnahme auf die Figuren der Zeichnung.

In einer erfindungsgemäßen Ausführungsform ist die axial wirkende Bremseinrichtung eine Bremsscheibe. Die Bremsscheibe ist dabei z.B. eine Bremsscheibe aus Kunststoff, beispielsweise eine Elastomerfeder oder Elastomerscheibe, oder wenigstens eine Federscheibe, beispielsweise eine gewölbte oder gewellte Federscheibe. Eine Elastomerfeder insbesondere aus Cellasto® hat den Vorteil, dass sie kaum Verschleiß aufweist.

In einer weiteren erfindungsgemäßen Ausführungsform ist die Bremsscheibe an dem Gehäuse durch eine Klebeschicht und/oder Einpressen in wenigstens eine Vertiefung in dem Gehäuse befestigt. Dadurch kann die Bremsscheibe sehr einfach und kostengünstig fest mit dem Gehäuse verbunden werden, so dass es nicht zu einer Bewegung zwischen der Bremsscheibe und dem Gehäuse kommt.

Gemäß einer erfindungsgemäßen Ausführungsform weist die Bremsscheibe wenigstens einen Vorsprung auf, welcher in einer Vertiefung des Gehäuses aufgenommen ist, beispielsweise formschlüssig und/oder kraftschlüssig. Auf diese Weise kann der Verdrehschutz zwischen Bremsscheibe und Gehäuse zusätzlich sichergestellt oder erhöht werden. Optional kann Bremsscheibe auch mit dem Gehäuse zusätzlich verklebt sein.

In einer weiteren erfindungsgemäßen Ausführungsform weist die Bremsscheibe wenigstens eine Aussparung auf, in welcher ein zugeordneter Vorsprung des Gehäuses aufgenommen ist, beispielsweise formschlüssig, kraftschlüssig und/oder verklebt aufgenommen ist. Eine derartige Aussparung in der Bremsscheibe sowie ein korrespondierender Vorsprung in dem Gehäuse sind leicht realisierbar und stellen ebenfalls einen zusätzlichen Verdrehschutz bereit.

In einer anderen erfindungsgemäßen Ausführungsform ist die radial wirkende Bremseinrichtung ein Bremsring. Der Bremsring weist vorzugsweise einen möglichst hohen Reibungskoeffizienten zumindest auf der Seite auf, mit welcher der Bremsring den Reibkontakt zu der zugeordneten Rolle herstellt. Der Bremsring kann je nach Breite auch eine Bremshülse bilden. Des Weiteren ist der Bremsring ein leicht herzustellendes Bauteil, welches zudem nur einen geringen Bauraum benötigt.

In einer weiteren erfindungsgemäßen Ausführungsform ist der Bremsring in dem Gehäuse befestigt und mit der Außenseite einer Radnabe der Rolle in Reibkontakt, wobei in der Radnabenbohrung die Welle aufgenommen ist. Auf diese Weise kann eine sehr kompakte Bauweise der permanent gebremsten Rollenvorrichtung erreicht werden.

In noch einer weiteren erfindungsgemäßen Ausführungsform weist die Radnabe einen Flansch auf, wobei der Bremsring in Reibkontakt mit dem Flansch der Radnabe ist. Der Flansch hat den Vorteil, dass er zusätzlich zum Befestigen an dem Gehäuse durch eine Rast- oder Clipsverbindung genutzt werden kann und dadurch eine kompakte Bauweise der Rollenvorrichtung zusätzlich verbessert.

Gemäß einer erfindungsgemäßen Ausführungsform weist der Bremsring wenigstens einen Vorsprung an seinem Außenumfang und/oder wenigstens einen Vorsprung an einer seiner Außenseiten auf, wobei der jeweilige Vorsprung in einer Aussparung des Gehäuses aufgenommen ist, beispielsweise formschlüssig, kraftschlüssig und/oder darin verklebt aufgenommen ist. Durch diese Verbindung des Bremsrings mit dem Gehäuse kann der Verdrehschutz ebenfalls verbessert werden.

In einer erfindungsgemäßen Ausführungsform sind die axial wirkende Bremseinrichtung und die radial wirkende Bremseinrichtung als eine einzige axial und radial wirkende Bremseinrichtung ausgebildet. Diese axial und radial Bremseinrichtung ist beispielsweise ein Bremstopf, welcher mit der Rolle derart verbunden ist, dass der Bremstopf mit der Rolle permanent in axialer und radialer Richtung in Reibkontakt ist zum permanenten Bremsen der Rollenvorrichtung in axialer und radialer Richtung. Ein derartiger Bremstopf kann sehr einfach aus Metall und/oder Kunststoff hergestellt werden. Beispielsweise kann der Bremstopf aus Metall mit einer Elastomerbeschichtung auf seinen Reibflächen hergestellt werden. Insbesondere kann der Bremstopf ein Metallteil, vorzugsweise ein Blechbiegeteil sein, das in axial und radialer Richtung wirkende federnde Laschen aufweist, die als Reibflächen auf Außenflanke und Stirnseite der Radnabe wirken.

In einer weiteren erfindungsgemäßen Ausführungsform ist der Bremstopf auf der Radnabe oder sofern vorhanden dessen Flansch derart angeordnet, dass der Bremstopf als radial wirkende Bremseinrichtung einen Reibkontakt zwischen der Außenseite der Radnabe und sofern vorhanden dessen Flansch und seinem Innenumfang bereitstellt, und als axiale wirkende Bremseinrichtung einen Reibkontakt zwischen der Stirnseite der Radnabe und seinem Boden bereitstellt. Der Boden kann dabei vollständig geschlossen oder auch nur teilweise geschlossen ausgebildet sein und z.B. eine Öffnung oder Loch aufweisen. Des Weiteren ist der Bremstopf vorzugsweise mit einer Verdrehsicherung in dem Gehäuse befestigt, um eine ungewollte radiale und/oder axiale Bewegung relativ zu dem Gehäuse zu verhindern.

In einer erfindungsgemäßen Ausführungsform ist die Rolle mit dem Gehäuse gekoppelt, beispielsweise mittels einer Rastverbindung zum Verrasten oder Verclipsen von Radnabe und Gehäuse. Solche Rast- oder Clipsverbindungen haben den Vorteil, dass sie leicht und kostengünstig zu realisieren sind und nur wenig Bauraum benötigen.

Erfindungsgemäß weist das Gehäuse eine Rollenaufnahme auf mit wenigstens einem Rastabschnitt, wobei in die Rollenaufnahme die Radnabe an dem wenigstens einen Rastabschnitt einrastbar oder einclipsbar ist. Auf diese Weise kann eine kompakte Bauform der Rollenvorrichtung erzielt werden.

Gemäß einer erfindungsgemäßen Ausführungsform weist die Rollenvorrichtung eine Befestigungsaufnahme auf zum Aufnehmen einer Befestigungseinrichtung zum Befestigen der Rollenvorrichtung an einem Sitz-, Liege und/oder Transportmöbel. Auf diese Weise kann die Rollenvorrichtung sehr leicht auch nachgerüstet werden und beispielsweise eine alte nicht permanent gebremste Rollenvorrichtung ersetzen.

In einer weiteren erfindungsgemäßen Ausführungsform ist die Befestigungsaufnahme mit dem Gehäuse durch wenigstens eine zusätzliche Verstärkungsrippe verbunden. Dadurch kann eine besonders stabile Bauweise erreicht werden.

In einer weiteren erfindungsgemäßen Ausführungsform ist das rollbare Sitz-, Liege und/oder Transportmöbel welches wenigstens eine permanent gebremste Rollenvorrichtung aufweist beispielweise ein Stuhl, insbesondere ein Hochstuhl, ein Sessel, ein Sofa, ein Bett, insbesondere ein ausziehbares Bett, eine Lager- und Transportpalette oder ein rollbarer Kleiderständer, Rollwagen, Rollgestell usw.. Die Erfindung ist jedoch auf die genannte Beispiele nicht beschränkt.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine Seitenansicht eines Hochstuhls, welcher mit Rollenvorrichtungen gemäß einer ersten Ausführungsform der Erfindung versehen ist;
- Fig. 2: eine Perspektivansicht einer der Rollenvorrichtungen des Hochstuhls gemäß Fig. 1;
- Fig. 3: eine Explosionsdarstellung der Rollenvorrichtung gemäß Fig. 2;
- Fig. 4: eine Seitenansicht der Rollenvorrichtung gemäß Fig. 2;
- Fig. 5: eine Schnittansicht A-A der Rollenvorrichtung gemäß Fig. 4;
- Fig. 6: eine Teilschnittansicht durch eine Rollenvorrichtung gemäß einer zweiten erfindungsgemäßen Ausführungsform;
- Fig. 7: eine Ansicht der Innenseite oder Rückseite der Rollenvorrichtung gemäß Fig. 6;
- Fig. 8: eine Draufsicht und eine Seitenansicht einer gewellten Federscheibe; und
- Fig. 9: eine Draufsicht und eine Seitenansicht einer gewölbten Federscheibe.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

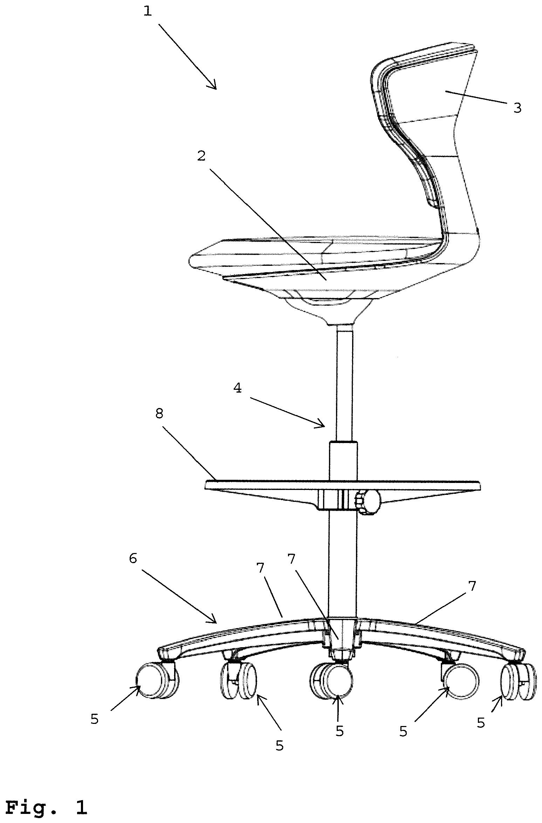

In Fig. 1 ist als Beispiel für ein rollbares Sitzmöbel ein rollbarer Stuhl, hier ein rollbarer Hochstuhl 1 oder Counterstuhl gezeigt. Der rollbare Hochstuhl 1 weist dabei einen Sitz 2 auf, welcher optional zusätzlich drehbar ausgebildet ist. An dem Sitz 2 können des Weiteren, wie in dem Ausführungsbeispiel in Fig. 1 gezeigt ist, optional eine zusätzliche Rückenlehne 3 und gegebenenfalls nicht dargestellte Armlehnen vorgesehen werden. Des Weiteren weist der Hochstuhl 1 einen Standfuß 4 auf, der an seinem unteren Ende mit den Rollvorrichtungen 5 versehen ist und des Weiteren wahlweise zusätzlich höhenverstellbar ausgebildet sein kann. Wie in dem Ausführungsbeispiel in Fig. 1 gezeigt ist, ist der Standfuß 4 an seinem unteren Ende z.B. mit einem Fußkreuz 6 ausgebildet, welches mehrere Arme 7 aufweist. An jedem Arm 7 ist dabei die erfindungsgemäße Rollenvorrichtung 5 befestigt mittels der der Hochstuhl 1 gerollt werden kann.

Wie zuvor beschrieben werden solche Hochstühle 1 dort eingesetzt, wo beispielsweise bei Sitz- und Steharbeitsplätzen eine erhöhte Arbeitsfläche vorgegeben ist. Bei einem solchen Hochstuhl erreichen normalerweise die Füße eines Benutzers des Stuhls in der normalen Sitzposition nicht den Boden. Daher weist ein Hochstuhl, wie der in Fig. 1 gezeigte beispielhafte Hochstuhl, eine Aufstiegshilfe oder eine Fußaufnahme, z.B. einen Fußring 8, für den Benutzer auf.

Der rollbar ausgebildete Hochstuhl 1 ist, wie zuvor beschrieben mit erfindungsgemäßen Rollenvorrichtungen 5 ausgestattet. Diese erfindungsgemäßen Rollenvorrichtungen 5 sind jeweils derart ausgebildet, dass der Hochstuhl 1 permanent gebremst ist aber von einem auf dem Hochstuhl sitzenden Benutzer bei Bedarf gerollt werden kann, um sich beispielsweise näher zu seiner erhöhten Arbeitsfläche oder von dieser weg zu bewegen, ohne, dass der Stuhl dabei unkontrolliert ins Rollen kommt, sondern weiterhin durch die Rollenvorrichtungen ausreichend gebremst wird.

Die permanent gebremste erfindungsgemäße Rollenvorrichtung 5 bremst den Hochstuhl 1 somit wenn er belastet ist und ein Benutzer auf ihm sitzt und andererseits auch wenn er nicht belastet ist und kein Benutzer auf ihm sitzt. Dabei lässt die permanent gebremste Rollenvorrichtung 5 jedoch ein Bewegen oder Rollen durch einen auf dem Stuhl sitzenden Benutzer zu.

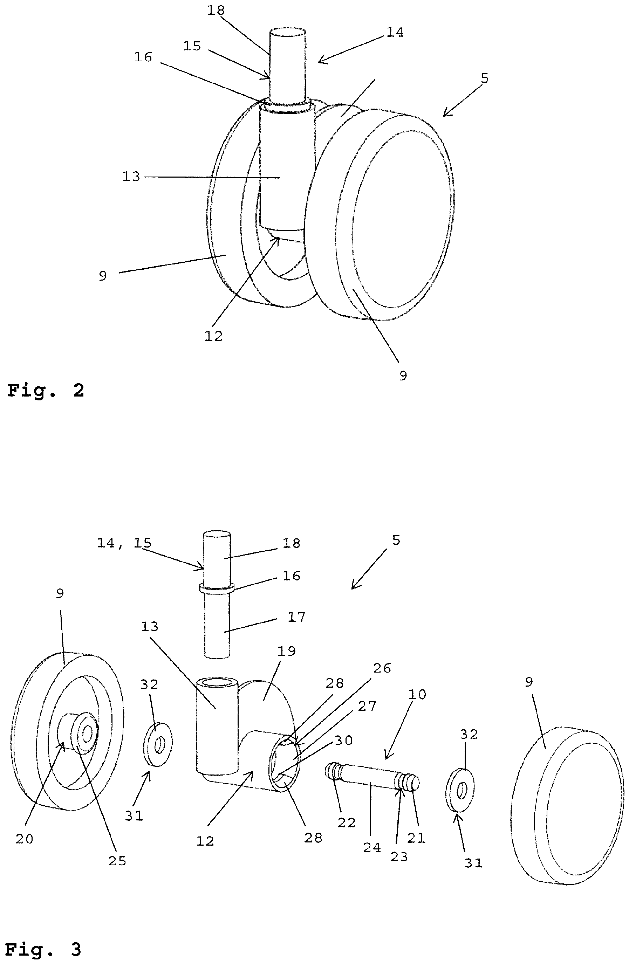

In Fig. 2 ist eine Perspektivansicht der erfindungsgemäßen Rollenvorrichtungen 5 des Hochstuhls gemäß Fig. 1 und in Fig. 3 eine Explosionsdarstellung der Rollenvorrichtung 5 gemäß Fig. 2 gezeigt.

Die in den Fig. 1 bis 3 gezeigte erfindungsgemäße Rollenvorrichtung 5 weist dabei beispielsweise zwei Rollen 9 oder Laufräder auf, welche über eine gemeinsame Welle 10 miteinander verbunden sind, deren Achse die Rollen- oder Laufradachse bildet. Die Welle 10 ist dabei in einer Lagerbuchse 11 eines Gehäuses 12 horizontal angeordnet und drehbar gelagert.

Das Gehäuse 12 erstreckt sich hierbei, wie in dem Ausführungsbeispiel in Fig. 2 und 3 gezeigt ist, zwischen den beiden Rollen 9. Dabei weist das Gehäuse 12 des Weiteren eine Befestigungsaufnahme 13 für eine Befestigungseinrichtung 14 auf, zur Befestigung der Rollenvorrichtung 5 an dem zu rollenden Sitz- und/oder Liegemöbel, hier beispielsweise dem zugeordneten Arm des Fußkreuzes des rollbaren Hochstuhls. Die Befestigungsaufnahme 13 ist in dem Ausführungsbeispiel in Fig. 1 vertikal angeordnet zur Aufnahme der Befestigungseinrichtung 14, um die Rollenvorrichtung 5 an einem zu rollenden Gegenstand, insbesondere einem Sitz-, Liege und/oder Transportmöbel zu befestigen.

In dem in Fig. 2 und 3 gezeigten Ausführungsbeispiel ist die Befestigungsaufnahme 13 beispielsweise als vertikal ausgerichtete Hülse ausgebildet, in welcher die Befestigungseinrichtung 14 vertikal aufgenommen ist, z.B. ein Stift und/oder ein Bolzen 15, beispielweise ein Schwenkbolzen. Ein Schwenkbolzen ist dabei ein rotationssymmetrischer Körper, der bei einer Richtungsänderung der Rollbewegung des Stuhls das Schwenken der Rolle über die vertikale Achse zulässt. Die Befestigungsaufnahme 13 ist beispielsweise aus Kunststoff und/oder Metall. Des Weiteren ist die Befestigungseinrichtung 14, insbesondere der in Fig. 2 und 3 gezeigte Bolzen 15, beispielsweise aus Kunststoff und/oder Metall, insbesondere Stahl.

In dem in Fig. 2 und 3 gezeigten Ausführungsbeispiel weist der Bolzen 15 als Befestigungseinrichtung 14 eine Auflage 16, z.B. ein ringförmige Auflage oder Flansch, auf, welche den Bolzen 15 in zwei Abschnitte unterteilt. Der Bolzen 15 liegt mit der Auflage 16 in dem Ausführungsbeispiel in Fig. 2 und 3 auf der Außenseite der Befestigungsaufnahme 13 auf. Ein unterer Abschnitt 17 des Bolzens 15 ist in der Befestigungsaufnahme 13 aufgenommen und befestigt. Der andere oder obere Abschnitt 18 des Bolzens 15 wird in einer korrespondierenden Aufnahme des zu rollenden Objekts, hier des Sitz-, Liege- und/oder Transportmöbels, aufgenommen und befestigt. Die Erfindung ist auf dieses Ausführungsbeispiel der Befestigungseinrichtung 14 und der dazu entsprechend gestalteten Befestigungsaufnahme 13 der Rollenvorrichtung nicht beschränkt. Es kann jede andere Befestigungseinrichtung oder Kombination von Befestigungseinrichtungen vorgesehen werden und in einer entsprechend dazu ausgebildeten Befestigungsaufnahme aufgenommen und befestigt werden, die geeignet ist bzw. sind, die Rollenvorrichtung an einem zugeordneten Sitz-, Liege- und/oder Transportmöbel zu befestigen.

Die erfindungsgemäße Rollenvorrichtung 5 kann jedoch nicht nur an einem Fußkreuz eines Stuhls sondern an jedem anderen rollbaren Sitz-, Liege- und/oder Transportmöbel vorgesehen oder nachgerüstet werden. Wie zuvor beschrieben gehören zu solchen Sitzmöbeln, beispielsweise ein rollbarer Stuhl, eine rollbare Couch oder Sofa, ein rollbarer Sessel usw.. Zu einem rollbaren Liegemöbel gehört z.B. ein rollbares Bett, insbesondere ein ausziehbares Bett mit Rollen, eine rollbare Schlafcouch usw.. Zu rollbaren Transportmöbel gehören beispielsweise Rollwagen, ein Rollgestell zum Transportieren von Gegenständen, ein rollbarer Kleiderständer, eine rollbare Palette, insbesondere rollbare Lager- und Transportpalette usw.. Die Erfindung ist aber auf die genannten Beispiele für Sitz-, Liege- und/oder Transportmöbel nicht beschränkt. Grundsätzlich kann jeder geeignete zu rollende Gegenstand mit einer erfindungsgemäßen Rollenvorrichtung 5 versehen werden.

In dem in Fig. 2 und 3 gezeigten Ausführungsbeispiel ist an dem Gehäuse 12 wenigstens eine Verstärkungsrippe 19 vorgesehen, welche die Befestigungsaufnahme 13 für die Befestigungseinrichtung 14 mit dem Gehäuse 12 und insbesondere der Lagerbuchse 11 verbindet, zum zusätzlichen Verstärken und Abstützen der Befestigungseinrichtung 14 an dem Gehäuse 12. Die Verstärkungsrippe 19 ist beispielsweise derart ausgebildet, dass sie nicht über die Rollen 9 der Rollenvorrichtung 5 hinaussteht sondern beispielsweise bündig mit diesen abschließt.

Wie in dem Ausführungsbeispiel in Fig. 3 gezeigt ist, weist die jeweilige Rolle 9 eine Wellenaufnahme oder Radnabe 20 mit einer Bohrung für die Aufnahme der Welle 10 auf. Die Welle 10 wird dabei in der Bohrung der Radnabe 20 aufgenommen und in dieser befestigt, beispielsweise eingepresst. Dazu ist das jeweilige Ende der Welle mit einer Schräge 21 versehen, um einen konischen oder kegelförmigen Abschnitt zu bilden zum leichteren Einführen der Welle 10 in die Bohrung der Radnabe 20. Daran anschließend weist die Welle 10 einen ringförmigen Abschnitt 22 auf, welcher mit der Bohrung der Radnabe 20 eine Presspassung bildet. An den ringförmigen Abschnitt 22 schließt sich wiederum eine nutförmige Vertiefung 23 mit beispielweise geraden oder wie in Fig. 3 gezeigt, abgeschrägten Seiten an. Auf die nutförmige Vertiefung 22 folgt ein zylindrischer Abschnitt 24, welcher in der Lagerbuchse 11 des Gehäuses 12 horizontal aufgenommen und drehbar gelagert ist.

Zur Befestigung des Gehäuses 12 an der jeweiligen Rolle 5, wird die Rolle 5 an dem Gehäuse 12 z.B. eingeclipst oder eingerastet, wie in dem Ausführungsbeispiel in Fig. 2 und 3 gezeigt ist. Dazu weist beispielweise die Radnabe 20 an ihrem Außenumfang einen Flansch 25, z.B. Wulst, auf, zum Einrasten oder Einclipsen in das Gehäuse 12. Zum Montieren der Einzelteile der Rollenvorrichtung wird in dem Gehäuse 12 z.B. zunächst die Welle 10 bzw. Achse und anschließend eine nachfolgend noch näher beschriebene Bremseinrichtung befestigt. Daraufhin erfolgt das Aufpressen oder Einclipsen bzw. Einrasten der Rollen 5 an dem Gehäuse 12.

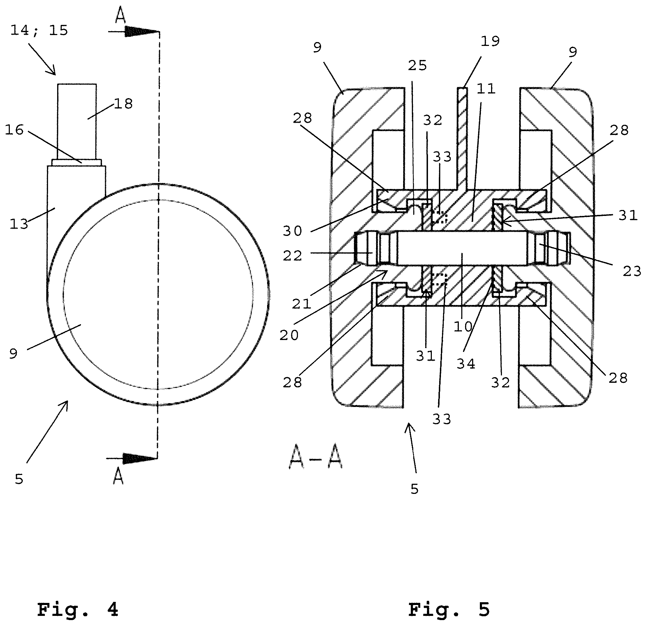

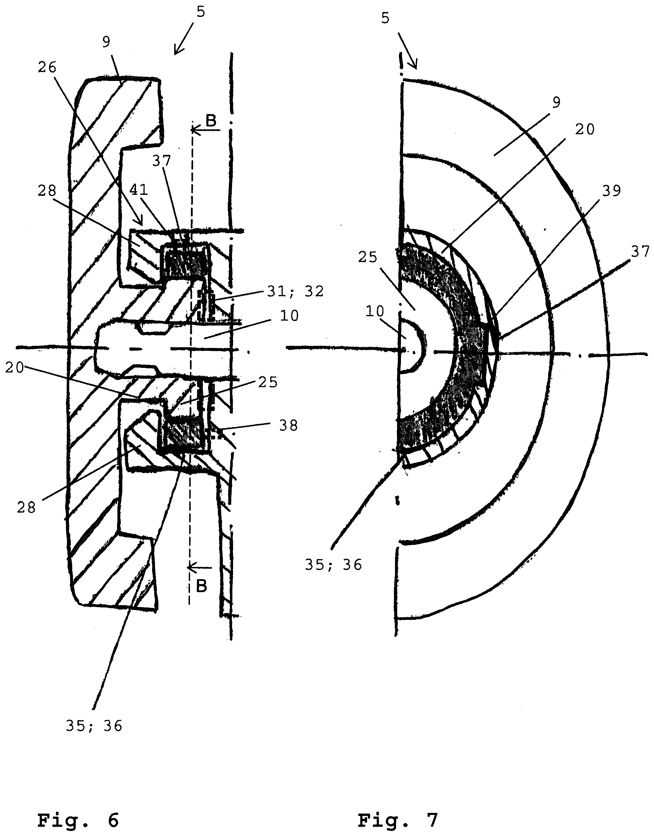

Das Gehäuse 12 weist hierbei eine Rollenaufnahme 26 auf, zum Aufnehmen und Einrasten oder Einclipsen der Radnabe 20 mit ihrem Flansch 25 in der Rollenaufnahme 26. Die Rollenaufnahme 26 ist dabei beispielsweise als eine Vertiefung 27 in dem Gehäuse 12 ausgebildet und weist wenigstens einen Rastabschnitt 28 oder wie in Fig. 3 gezeigt z.B. zwei einander gegenüberliegende Rastabschnitte 28 auf, zum Einrasten oder Einclipsen der Rolle 9 und insbesondere deren Radnabe 26 auf, sowie zum Aufnehmen wenigstens einer Bremseinrichtung. Die Rastabschnitte 28 erstrecken sich dabei beispielsweise von der Innenseite der Vertiefung radialer nach innen, wie in Fig. 3 und nachfolgenden Fig. 5 und 6 gezeigt ist. Die Erfindung ist jedoch auf diese Ausgestaltung und Position der Rastabschnitte 28 nicht beschränkt. Es kann jede Verrasten oder Verclipsung an der Rolle und dem Gehäuse ausgebildet sein, zum Verrasten oder Verclipsen der Rolle an dem Gehäuse oder umgekehrt.

Die jeweilige Bremseinrichtung wird nachfolgend noch detaillierter beschrieben. Statt einem oder zwei Rastabschnitten 28 können auch mehr Rastabschnitte vorgesehen werden, je nach Funktion und Einsatzzweck. Die Rollenaufnahme 26 ist in dem in Fig. 3 gezeigten Ausführungsbeispiel als ein Hülse, z.B. zylindrische Hülse, ausgebildet. Die zylindrische Hülse 29 ist dabei z.B. einstückig mit der Lagerbuchse 11 ausgebildet und weist die beiden Rastabschnitte 28 auf, wie sie in Fig. 3 beispielhaft gezeigt sind. Die Rastabschnitte 28 ragen dabei nach innen, insbesondere radial nach innen, und können gegebenenfalls mit einer zusätzlichen Abschrägung 30 an ihrer Außenkante versehen sein, zum Erleichtern des Einführens der Radnaben 20 und ihres Flansches 25, sowie der Bremseinrichtung. Die Rastabschnitte 28 sind dabei ausreichend flexible, so dass die Rolle 9 und z.B. die Radnabe 20 in die Rollenaufnahme 26 eingeführt und an den Rastabschnitten 28 eingerastet, sowie die jeweilige Bremseinrichtung eingeführt werden kann. Des Weiteren hintergreifen die Rastabschnitte 28 den Flansch 25 der Radnabe 20, wie in Fig. 5 gezeigt ist.

Die Erfindung ist jedoch nicht auf diese Befestigung von Rolle 9 und Gehäuse 12 beschränkt. Es kann jede andere Art der Befestigung vorgesehen werden die geeignet ist, das Gehäuse 12 und die Rolle 9 miteinander zu verbinden und das Anbringen der jeweiligen Befestigungseinrichtung an dem Gehäuse zu erlauben.

Zum Bereitstellen einer gebremsten Rollenvorrichtung 5 und insbesondere einer permanent gebremsten Rollenvorrichtung 5 ist in der ersten Ausführungsform der erfindungsgemäßen Rollenvorrichtung 5 eine axiale oder axial wirkende Bremseinrichtung 31 vorgesehen.

Als eine axiale oder axial wirkende Bremseinrichtung 31 ist in dem in Fig. 3 gezeigten Ausführungsbeispiel der erfindungsgemäßen Rollenvorrichtung 5 eine Bremsscheibe 32 z.B. aus Kunststoff, insbesondere eine Elastomerfeder vorgesehen. Derartige Elastomerfedern sind aus Polyurethan (PUR) oder Microcellular Urethan (MCU). Beispielsweise kann für die Elastomerfeder ein offenzelliger oder geschlossenzelliger Schaumstoff, insbesondere mikrozelliger Schaumstoff, vorgesehen werden. Als Schaumstoff kann dabei ein Schaumstoff der Marke Cellasto® der Fa. BASF oder ein anderer Kunststoff, welcher einen hohen Reibungskoeffizienten und einen möglichst geringen Verschließ aufweist eingesetzt werden. Ein geeigneter Reibwert oder Reibungskoeffizient für die Bremseinrichtung richtet sich nach der gewünschten Bremswirkung. Bei geringeren Reibungskoeffizienten muss die axiale Vorspannkraft erhöht werden, was zu erhöhtem Verschleiß führt. Daher werden Materialien mit einem hohen Reibungskoeffizienten, wie z.B. Cellasto® usw., bevorzugt.

Cellasto®-Bauteile, wie beispielsweise Elastomerfedern aus Cellasto®, basieren auf zelligen Polyurethan (PUR)-Elastomeren. Die geformten Komponenten werden in einem geschlossen geformten Schäumprozess produziert. Cellasto®-Bauteile sind hoch belastbare Feder- und Dämpfungselemente mit folgenden charakteristischen Eigenschaften: hohe Volumenkompressibilität, geringer Druckverformungsrest, sehr gutes statisches und dynamisches Langzeitverhalten, Einsatzbereich von -30°C bis +80°C Umgebungstemperatur und gute Beständigkeit gegenüber vielen Chemikalien.

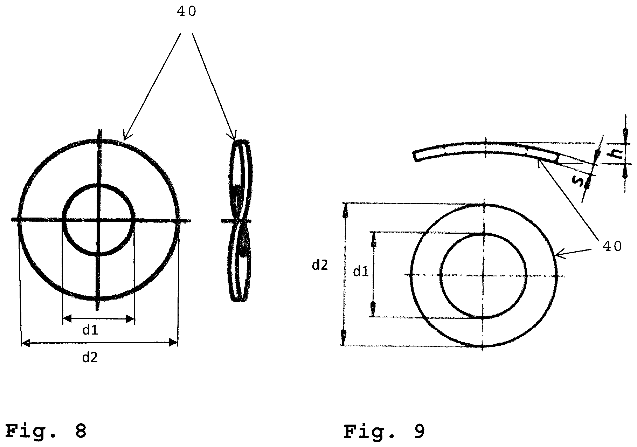

Statt einer Bremsscheibe 32 aus Kunststoff, wie einer Elastomerfeder, als Bremseinrichtung 31 kann auch wenigstens eine Federscheibe vorgesehen werden, beispielsweise eine gewellte Federscheibe, wie in nachfolgender Fig. 8 gezeigt ist, oder eine gewölbte Federscheibe, wie in Fig. 9 gezeigt ist, usw.. Vorzugsweise ist die Federscheibe oder die Kombination aus Federscheiben mit einer nicht dargestellten Verdrehsicherung an dem Gehäuse 12 derart befestigt, dass die Federscheibe bzw. die Federscheiben sich nicht gegenüber dem Gehäuse oder relativ zu dem Gehäuse drehen. Die Erfindung ist jedoch auf die genannten Beispiele für Federscheiben nicht beschränkt. Es kann jede andere Federscheibe eingesetzt werden, die geeignet ist, eine zugeordnete Rolle 8 der Rollenvorrichtung 5 zu bremsen. Vorzugsweise wird eine Federscheibe oder eine Kombination aus Federscheiben mit einem möglichst hohen Reibungskoeffizienten eingesetzt.

Die Bremsscheibe 32 oder alternativ Federscheibe als Bremseinrichtung 31 wird dabei auf der Welle 10 und zwischen dem Gehäuse 12 und der Rolle 9, insbesondere der Radnabe 20 der Rolle 9, angeordnet, wie in Fig. 3 angedeutet und in nachfolgender Schnittansicht in Fig. 5 gezeigt ist.

In Fig. 4 ist eine Seitenansicht der Rollenvorrichtung 5 gemäß Fig. 2 und in Fig. 5 eine Schnittansicht A-A der Rollenvorrichtung gemäß Fig. 4 dargestellt. Die Befestigung einer im Folgenden detaillierter beschriebenen Bremsscheibe an dem Gehäuse ist in der Schnittansicht der Fig. 5 rein schematisch, stark vereinfacht und nicht maßstäblich.

Wie in Fig. 4 gezeigt ist, ist zu der Rollen- oder Lagerachse versetzt die vertikale Befestigungsaufnahme 13 für die Befestigungseinrichtung 14 an dem Gehäuse 12 vorgesehen. Dabei ist als Befestigungseinrichtung 14 der Bolzen 15 in der Befestigungsaufnahme 13 aufgenommen und liegt mit seiner Auflage 16 an der Außenseite der Befestigungseinrichtung 14 an. Des Weiteren schließt die Verstärkungsrippe 19 in dem Ausführungsbeispiel in Fig. 4 und 5 z.B. bündig mit dem Außenumfang der Rollen 9 ab.

In der Schnittansicht A-A in Fig. 5 sind die beiden Rollen 9 durch die gemeinsame Welle 10 miteinander verbunden. Die Welle 10 ist dabei mit ihrem zylindrischen Abschnitt 24 in der Lagerbuchse 11 des Gehäuses 12 horizontal angeordnet und drehbar gelagert. Des Weiteren ist die Welle 10 mit ihrem Ende in der Radnabenbohrung 20 der jeweiligen Rolle 9 aufgenommen und darin befestigt, beispielsweise eingepresst. Die Rolle 9 ist mit ihrer Radnabe 20 mit dem Gehäuse 12 verbunden, beispielsweise verclipst oder verrastet. Wie in dem Ausführungsbeispiel in Fig. 5 gezeigt ist, weist das Gehäuse 12 jeweils eine Rollenaufnahme 26 mit einem oder mehreren Rastabschnitten 28 auf, in welcher die Radnabe 20 mit ihrem Flansch 25 einführbar und einclipsbar oder einrastbar ist. Wie in der Schnittansicht in Fig. 5 gezeigt ist, kann der jeweilige Rastabschnitt 28 eine Abschrägung 30 oder abgeschrägte Außenkante aufweisen, zum Vereinfachen des Einführens des Flansches 25 in die Rollenaufnahme 26.

Als axiale oder axial wirkende Bremseinrichtung 31 ist in dem in Fig. 5 gezeigten Ausführungsbeispiel eine Bremsscheibe 32, insbesondere eine in axialer Richtung wirkende Bremsscheibe 32 z.B. aus Kunststoff mit einem möglichst großen Reibungskoeffizienten, beispielsweise eine Scheibe aus Cellasto®, vorgesehen. Die Bremsscheibe 32 ist dabei auf der Welle 10 angeordnet zwischen dem Gehäuse 12 und dem äußeren Ende oder der Stirnseite der Radnabe 20.

Die Bremsscheibe 32 ist hierbei an dem Gehäuse 12 zusätzlich befestigt, so dass es zu keiner Bewegung oder im Wesentlichen keinerlei Bewegung zwischen der Bremsscheibe 32 und dem Gehäuse 12 kommt. Des Weiteren ist die Bremsscheibe 32 mit ihrer Vorderseite in Reibkontakt, vorzugsweise in flächigem Reibkontakt, mit der Rolle 9, beispielsweise der Außenseite oder Stirnfläche der Radnabe 20 der Rolle 9 in dem in Fig. 5 gezeigten Ausführungsbeispiel.

Aufgrund des Reibkontakts zwischen der Rolle 9 und der Bremsscheibe 32 wird eine Haftreibung zwischen der Rolle 9 und der Bremsscheibe 32 erzeugt. Wenn die Rolle 9 sich gegenüber dem Gehäuse 12 bewegt, wird eine Gleitreibung zwischen der Rolle 9 und der an dem Gehäuse 12 befestigen Bremsscheibe 32 erzeugt. Auf diese Weise wird die Rolle 9 und damit die Rollenvorrichtung 5 permanent gebremst, wobei die Rolle 9 jedoch bewegt werden kann, wenn eine Kraft auf die Rolle 9 wirkt die größer als die Haftreibung zwischen Rolle 9 und der an dem Gehäuse 12 befestigen Bremsscheibe 32 ist. Dadurch kann im Falle eines Hochstuhls, dieser Hochstuhl von einem Benutzer, welcher auf dem Hochstuhl sitzt, bei Bedarf bewegt und beispielsweise hin zu seiner oder weg von seiner Arbeitsfläche bewegt werden.

Die in axialer Richtung wirkende Bremsscheibe 32 kann an dem Gehäuse 12 befestigt werden, in dem die Bremsscheibe 32 beispielsweise an dem Gehäuse 12 festgeklebt wird, wie durch die Klebeschicht 34 in Fig. 5 angedeutet ist. Das Vorsehen einer Klebeschicht 34 ist hierbei lediglich ein Beispiel für eine Verdrehsicherung für die Bremsscheibe 32 in dem Gehäuse 12. In einem weiteren Ausführungsbeispiel kann die Verdrehsicherung für die Bremsscheibe 32 auch erzielt werden, indem die Bremsscheibe 32 mit ihrer Außenkontur formschlüssig in dem Gehäuse 12 aufgenommen ist. Die Bremsscheibe 32 kann dabei mit ihrer Außenkontur eine Preßpassung mit dem Gehäuse 12 bilden.

Des Weiteren können an dem Gehäuse 12 eine oder mehrere zusätzliche Vertiefungen 33 vorgesehen werden, in welche die Bremsscheibe 32 eingepresst und/oder eingeklebt wird. Zwei Vertiefungen 33 des Gehäuses 12 sind beispielhaft in der Schnittansicht A-A in dem Ausführungsbeispiel in Fig. 5 rein schematisch und stark vereinfach mit einer gepunkteten Linie angedeutet. Dabei kann die Bremsscheibe 32 außerdem optional mit jeweils einem zusätzlichen nicht dargestellten Vorsprung ausgebildet sein, welcher in der zugeordneten Vertiefung 33 in dem Gehäuse 12 aufnehmbar, insbesondere einpressbar und/oder verklebar ist.

Der jeweilige Vorsprung der Bremsscheibe 32 kann in der zugeordneten Vertiefung 33 des Gehäuses 12 beispielsweise formschlüssig und/oder kraftschlüssig aufgenommen werden und optional zusätzlich darin verklebt werden.

In einer weiteren alternativen Ausführungsform kann die Bremsscheibe 32 zusätzlich oder alternativ mit wenigstens einer nicht dargestellten Aussparung, z.B. einer Vertiefung oder einem nicht dargestellten Durchgangsloch versehen sein, zum Aufnehmen eines korrespondierenden nicht dargestellten Vorsprungs des Gehäuses 12. Dabei kann der Vorsprung in der Vertiefung oder dem Durchgangsloch formschlüssig und/oder kraftschlüssig aufgenommen sein und optional zusätzlich darin beispielsweise verklebt sein.

In einem anderen erfindungsgemäßen Ausführungsbeispiel kann als Bremsscheibe 32 auch wenigstens eine Federscheibe eingesetzt werden, wobei die Federscheibe oder eine Kombination aus Federscheiben einen möglichst hohen Reibungskoeffizienten aufweist. Die Federscheibe oder Kombination aus Federscheiben wird dabei auf der Welle 10 zwischen dem Gehäuse 12 und der Rolle 9 vorgesehen. Wie in dem Ausführungsbeispiel in Fig. 5 für die Bremsscheibe 32 gezeigt ist, wird die Federscheibe oder Kombination aus Federscheiben zwischen dem Gehäuse 12, beispielsweise in der Rollenaufnahme 26 des Gehäuses 12, und der Radnabe 20 der Rolle 9 angeordnet. Die wenigstens eine Federscheibe 32 ist dabei vorzugsweise mit einer zusätzlichen Verdrehsicherung auf Gehäuseseite versehen, um eine definierte Relativbewegungen zwischen der wenigstens einen Federscheibe 32 und der Stirnseite der Radnabe 20 zu erzielen, jedoch ein Drehen der Federscheibe relativ zu dem Gehäuse 12 zu vermeiden. Die Verdrehsicherung für die wenigstens eine Federscheibe 32 kann beispielsweise durch Formschluss mit dem Gehäuse 12 erzielt werden. Dabei kann die wenigstens eine Federscheibe 32 z.B. mit einer Lasche versehen sein, die in dem Gehäuse 12 aufgenommen ist und ein Drehen der wenigstens einen Federscheibe 32 relativ zu dem Gehäuse 12 verhindert. Ebenso kann eine Verdrehsicherung durch einen Formschluss zumindest einer Teilkontur der wenigstens einen Federscheibe 32 mit dem Gehäuse 12 erzielt werden.

In Fig. 6 ist eine Teilschnittansicht durch eine Rollenvorrichtung 5 gemäß einer zweiten erfindungsgemäßen Ausführungsform und in Fig. 7 eine Schnittansicht B-B der Rollenvorrichtung 5 gemäß Fig. 6 dargestellt. Die Darstellung in den Fig. 6 und 7 ist dabei rein schematisch, stark vereinfacht und nicht maßstäblich.

Die Rollenvorrichtung 5 gemäß der zweiten erfindungsgemäßen Ausführungsform weist dabei im Wesentlichen denselben Aufbau auf, wie die Rollenvorrichtung gemäß der ersten erfindungsgemäßen Ausführungsform, wie sie zuvor anhand der Fig. 1-5 gezeigt und beschrieben wurde. Daher wird hierzu auf die Beschreibung zu den Fig. 1-5 verwiesen, um unnötige Wiederholungen zu vermeiden.

Die zweite erfindungsgemäße Ausführungsform unterscheidet sich von der ersten erfindungsgemäßen Ausführungsform in dem die Bremseinrichtung eine radiale oder radial wirkende Bremseinrichtung 35 ist.

Wie in dem Ausführungsbeispiel in Fig. 6 und 7 gezeigt ist, ist an dem Gehäuse 12 gegenüberliegende beispielsweise dem Außenumfang der Radnabenbohrung 20, z.B. dem Außenumfang des Flansches 25 der Radnabe 20, die Bremseinrichtung oder radial wirkende Bremseinrichtung 35 vorgesehen. Als Bremseinrichtung 35 ist dabei beispielsweise ein in radialer Richtung wirkender Bremsring 36 mit einem möglichst hohen Reibungskoeffizienten vorgesehen. Je nach Breite des Bremsrings 36 kann dieser auch eine Hülsenform aufweisen.

Beispielsweise kann der Bremsring 36 aus Kunststoff bestehen oder diesen zumindest auf seiner Innenumfangsseite oder Kontaktfläche mit der Rolle 9 als Beschichtung aufweisen. In einem weiteren Ausführungsbeispiel kann der Bremsring 36 auch ein Metallteil mit einer radial wirkenden Federlasche sein.

Als Bremsring 36 kann beispielweise ein Elastomer-Bremsring mit einem möglichst hohen Reibungskoeffizienten vorgesehen werden. Der Elastomer-Bremsring kann beispielsweise, wie die Elastomerfeder zuvor aus Polyurethan (PUR) oder Microcellular Urethane (MCU) hergestellt sein. Beispielsweise kann für den Elastomer-Bremsring ein offenzelliger oder geschlossenzelliger Schaumstoff, insbesondere mikrozelliger Schaumstoff, vorgesehen werden. Als Schaumstoff kann dabei ein Schaumstoff der Marke Cellasto® der Fa. BASF oder ein anderer Kunststoff eingesetzt werden, welcher einen möglichst hohen Reibungskoeffizienten und vorzugsweise außerdem einen möglichst geringen Verschleiß aufweist.

Der Bremsring 36 ist zusätzlich an dem Gehäuse 12 befestigt, insbesondere in der Rollenaufnahme 26 des Gehäuses 12, so dass es zu keiner Bewegung oder im Wesentlichen keinerlei Bewegung zwischen dem Bremsring 36 und dem Gehäuse 12 insbesondere in radialer Richtung und vorzugsweise zusätzlich in axialer Richtung kommt.

Des Weiteren ist der Bremsring mit seiner Innenfläche oder seinem Innenumfang mit der Rolle, beispielweise dem Außenumfang des Flansches 25 der Radnabe 20, in Reibkontakt, vorzugsweise in flächigem Reibkontakt, wie in dem in Fig. 6 gezeigten Ausführungsbeispiel.

Aufgrund des Reibkontakts zwischen der Rolle 9 und dem Bremsring 36 wird eine Haftreibung zwischen der Rolle 9 und dem Bremsring 36 erzeugt. Wenn die Rolle 9 sich gegenüber dem Gehäuse 12 bewegt, wird eine Gleitreibung zwischen der Rolle 9 und mit dem Gehäuse 12 verbundenen Bremsring 36 erzeugt. Auf diese Weise wird die Rolle 9 und damit die Rollenvorrichtung 5 permanent gebremst, wobei die Rolle 9 jedoch bewegt werden kann, wenn eine Kraft auf die Rolle 9 wirkt die größer als die Haftreibung zwischen Rolle 9 und dem an dem Gehäuse 12 befestigen Bremsring 36 ist. Dadurch kann im Falle eines Hochstuhls, dieser Hochstuhl von einem Benutzer, welcher auf dem Hochstuhl sitzt, bei Bedarf bewegt und beispielsweise hin zu seiner oder weg von seiner Arbeitsfläche bewegt werden.

Der in radialer Richtung wirkende Bremsring 36 kann an dem Gehäuse 12 befestigt werden, indem der Bremsring 36 beispielsweise wenigstens einen oder mehrere Vorsprünge 37 am Außenumfang aufweist, wie in Fig. 6 mit einer gepunkteten Linie angedeutet und in Fig. 7 illustriert ist, oder wenigstens einen Vorsprung 38 an der dem Gehäuse 12 gegenüberliegenden Außenseite, wie in Fig. 6 mit einer gestrichelten Linie angedeutet ist, welcher in einer jeweils nicht dargestellten zugeordneten Aussparung, z.B. einer Vertiefung oder einem Durchgangloch, in dem Gehäuse 12 aufgenommen ist. Der jeweilige Vorsprung 37, 38 des Bremsrings 36 kann beispielsweise formschlüssig und/oder kraftschlüssig in der zugeordneten Aussparung des Gehäuses 12 aufgenommen sein und zusätzlich oder alternativ in der Aussparung eingeklebt sein. Eine Vertiefung 39 als Aussparung ist dabei in Fig. 7 für die Aufnahme eines entsprechenden Vorsprungs 37 gezeigt und in Fig. 6 ist als Aussparung ein Durchgangsloch 41 zur Aufnahme eines weiteren Vorsprungs 37 gezeigt. Die Darstellung in den Fig. 6 und 7 ist rein schematisch und nicht maßstäblich, insbesondere die Befestigung des Bremsrings 36 an dem Gehäuse 12.

In einer weiteren alternativen Ausführungsform kann der Bremsring 36 zusätzlich oder alternativ mit wenigstens einer nicht dargestellten Aussparung, insbesondere einer Vertiefung oder einem Durchgangsloch, versehen sein, zum Aufnehmen eines korrespondierenden nicht dargestellten Vorsprungs des Gehäuses 12. Dabei kann der Vorsprung des Gehäuses 12 in der Aussparung des Bremsrings 36 formschlüssig und/oder kraftschlüssig aufgenommen sein und zusätzlich oder alternativ darin beispielsweise verklebt sein. Dadurch wird ein Verdrehschutz, insbesondere bei einer formschlüssigen und/oder kraftschlüssigen Verbindung, der Bremseinrichtung 35 in dem Gehäuse 12 erreicht und insbesondere eine ungewollte radiale Bewegung der Bremseinrichtung 35 gegenüber dem Gehäuse 12 verhindert.

Die beiden Rastabschnitte 28 der Rollenaufnahme 26 hintergreifen dabei den Flansch 25 der Radnabe 20, wie in Fig. 6 angedeutet ist, und liegen an diesem Flansch 25 an, wie zuvor auch in dem in Fig. 5 gezeigten Ausführungsbeispiel. Grundsätzlich können die Rastabschnitte 28 auch zusätzlich oder auch ausschließlich an der radial wirkenden Bremseinrichtung 35 anliegen. Liegt der Rastabschnitt 28 ausschließlich an der radial wirkenden Bremseinrichtung 35 an, so kann durch den Verschleiß der Reibpartner die Reibung zwischen den Reibpartnern sehr schnell abnehmen und dadurch keine gleichbleibende Bremswirkung über die Laufzeit der Rolle erreicht werden. Daher ist die nachstellende Wirkung der Bremseinrichtung vorteilhaft. Dies wird durch die Elastizität der Elastomerfeder z.B. aus Cellasto® oder z.B. durch einen federnden Abschnitt einer Metallfeder als Federscheibe erreicht. Bei dem in Fig. 6 gezeigten Ausführungsbeispiel, bei welchem die Rastabschnitte 28 z.B. nur an dem Flansch 35 anliegen, können Kräfte in axialer Richtung besonders gut aufgenommen werden.

Des Weiteren kann, wie in dem Ausführungsbeispiel in Fig. 6 mit einer gestrichelten Linie angedeutet ist, neben der radial wirkenden Bremseinrichtung 35, wahlweise zusätzlich auch die zuvor insbesondere mit Bezug auf die Fig. 4 und 5 beschriebene axial wirkende Bremseinrichtung 31 bei der erfindungsgemäßen Rollenvorrichtung 5 vorgesehen werden. Bezüglich der Ausgestaltung und der Befestigung der axialen oder axial wirkenden Bremseinrichtung 31 wird auf die Beschreibung insbesondere in den Fig. 2 bis 5 Bezug genommen, um unnötige Wiederholungen zu vermeiden. Die axial wirkende Bremseinrichtung 31 und die radial wirkende Bremseinrichtung 35 sind bei einer Kombination beider Bremseinrichtungen 31, 35 derart ausgebildet oder vorgesehen, dass die axial wirkende Bremseinrichtung 31 die Rolle 9 und insbesondere, in dem in Fig. 6 und 7 gezeigten Ausführungsbeispiel, die Radnabe 20 zum Erzeugen einer Haftreibung aber nicht die radiale Bremseinrichtung 35, insbesondere deren Bremsring 36 oder Bremshülse, kontaktiert. Umgekehrt kontaktiert die radial wirkende Bremseinrichtung 35 die Rolle 9 und insbesondere die Radnabe 20 zum Erzeugen einer Haftreibung nicht aber die axial wirkende Bremseinrichtung 31. In einem weiteren nicht dargestellten erfindungsgemäßen Ausführungsbeispiel sind dagegen die beiden Bremseinrichtungen 31 und 35 miteinander in Kontakt. Bezogen auf das in Fig. 6 gezeigte Ausführungsbeispiel, kann dabei der Bremsring 36 oder die Bremshülse der radialen Bremseinrichtung 35 zusätzlich in Kontakt mit der axialen Bremseinrichtung 31 sein. Auf diese Weise sind die beiden Bremseinrichtungen 31 und 35 nicht nur jeweils mit der Rolle 9 sondern zusätzlich auch miteinander in Kontakt.

In einem weiteren Ausführungsbeispiel können die radiale und axiale Bremseinrichtung 31, 35 auch als eine einzige axiale und radiale Bremseinrichtung ausgebildet sein. Beispielweise kann diese nicht dargestellte radiale und axiale Bremseinrichtung als ein Bauteil mit axial und radial federnden Abschnitten ausgebildet sein. Mit Bezug auf das in Fig. 6 gezeigte Ausführungsbeispiel kann beispielsweise ein Bremstopf, insbesondere Elastomertopf, als radiale und axiale Bremseinrichtung vorgesehen werden. Der Bremstopf ist dabei derart ausgebildet, dass er auf die Radnabe 20 und sofern vorhanden ihren Flansch 25 derart aufsteckbar ist, dass er als radial wirkende Bremseinrichtung einen Reibkontakt zwischen der Außenseite der Radnabenbohrung 20 bzw. deren Flansch 25 und einem Innenumfang des Elastomertopfs bereitstellt, und als axiale wirkende Bremseinrichtung außerdem einen Reibkontakt zwischen der Stirnseite der Rolle 9 bzw. der Radnabe 20 und dem Boden des Bremstopfs bereitstellt. Der Bremstopf ist dabei vorzugsweise ebenfalls mit einer Verdrehsicherung versehen, um ein Drehen des Bremstopfs gegenüber dem Gehäuse zu verhindern. Eine derartige Verdrehsicherung kann durch eine formschlüssige, kraftschlüssige und/oder Klebeverbindung zwischen dem Gehäuse und dem Bremstopf erzielt werden.

In Fig. 8 ist ein Ausführungsbeispiel für eine gewellte Federscheibe 40 in einer Draufsicht und einer Seitenansicht gezeigt, wobei der Innendurchmesser d1 und der Außendurchmesser d2 der Federscheibe 40 eingezeichnet ist. Eine derartige Federscheibe 40 oder eine Kombination, z.B. Stapel, aus mehreren solcher Federscheiben kann statt der zuvor in den Fig. 3 und 5 gezeigten Bremsscheibe eingesetzt werden.

Ein weiteres Beispiel für eine Federscheibe 40 ist in Fig. 9 in einer Draufsicht und einer Seitenansicht gezeigt. Die Federscheibe 40 in Fig. 9 ist dabei eine gewölbte Federscheibe. Der Innendurchmesser d1 und der Außendurchmesser d2 der Federscheibe 40 ist hierbei in Fig. 9 ebenfalls eingezeichnet. Eine derartige gewölbte Federscheibe 40 oder eine Kombination, z.B. Stapel, aus mehreren solcher gewölbten Federscheiben kann statt der zuvor in den Fig. 3 und 5 gezeigten Bremsscheibe eingesetzt werden.

Die Erfindung ist auf die beiden Ausführungsbeispiele für eine Federscheibe nicht beschränkt. Es kann jede andere Form von Federscheibe oder Kombination von Federscheiben eingesetzt werden, welche als axial wirkende Bremsscheibe geeignet sind und vorzugsweise einen möglichst großen Reibungskoeffizienten aufweisen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Die zuvor beschriebenen Ausführungsformen sind miteinander kombinierbar insbesondere einzelne Merkmale davon.

### Bezugszeichenliste

- 1: Hochstuhl
- 2: Sitz
- 3: Rückenlehne
- 4: Standfuß
- 5: Rollenvorrichtung
- 6: Fußkreuz
- 7: Arm
- 8: Fußring
- 9: Rolle
- 10: Welle
- 11: Lagerbuchse
- 12: Gehäuse
- 13: Befestigungsaufnahme
- 14: Befestigungseinrichtung
- 15: Bolzen
- 16: Auflage (Bolzen)
- 17: Unterer Abschnitt (Bolzen)
- 18: Oberer Abschnitt (Bolzen)
- 19: Verstärkungsrippe
- 20: Radnabe
- 21: Schräge (Welle)
- 22: Ringförmiger Abschnitt (Welle)
- 23: Nutförmige Vertiefung
- 24: Zylindrischer Abschnitt
- 25: Flansch
- 26: Rollenaufnahme
- 27: Vertiefung
- 28: Rastabschnitt
- 29: Zylindrischer Hülse
- 30: Abschrägung (Rastabschnitt)
- 31: Axial wirkende Bremseinrichtung
- 32: Bremsscheibe
- 33: Vertiefung
- 34: Klebeschicht
- 35: Radiale Bremseinrichtung
- 36: Bremsring
- 37: Vorsprung
- 38: Vorsprung
- 39: Vertiefung
- 40: Federscheibe
- 41: Durchgangsloch

## Patentansprüche

1. Permanent gebremste Rollenvorrichtung (5) für ein rollbares Sitz-, Liege- und/oder Transportmöbel (1), insbesondere einen Stuhl, wobei die Rollenvorrichtung aufweist:
zwei Rollen (9), die über eine gemeinsame Welle (10) miteinander verbunden sind, wobei die jeweilige Rolle (9) eine Radnabe (20) aufweist,
ein Gehäuse (12) mit einer Lagerbuchse (11), in welchem die Welle drehbar gelagert ist, wobei eine axial wirkende Bremseinrichtung (31) und/oder eine radial wirkende Bremseinrichtung (35) an dem Gehäuse (12) befestigt ist und mit der Rolle (9) permanent in Reibkontakt ist zum permanenten Bremsen der Rollenvorrichtung (5), wobei das Gehäuse (12) eine Rollenaufnahme (26) aufweist mit wenigstens einem Rastabschnitt (28),
wobei in die Rollenaufnahme (26) die Radnabe (20) an dem wenigstens einen Rastabschnitt (28) einrastbar oder einclipsbar ist.

2. Rollenvorrichtung nach Anspruch 1,
**dadurch gekennzeichnet,**
**dass** die axial wirkende Bremseinrichtung (31) eine Bremsscheibe (32) ist, wobei die Bremsscheibe eine Bremsscheibe aus Metall und/oder Kunststoff ist, wobei die Bremsscheibe aus Kunststoff insbesondere eine Elastomerfeder ist, oder wobei die axial wirkende Bremseinrichtung (31) wenigstens eine Federscheibe (40), insbesondere eine gewölbte oder gewellte Federscheibe, ist.

3. Rollenvorrichtung nach Anspruch 2,
**dadurch gekennzeichnet,**
**dass** die Bremsscheibe (32) an dem Gehäuse (12) durch eine Klebeschicht (34), durch Formschluss und/oder Kraftschluss, insbesondere durch Einpressen, in wenigstens einer Vertiefung (33) in dem Gehäuse (12) befestigt ist.

4. Rollenvorrichtung nach einem der Ansprüche 2 oder 3, **dadurch gekennzeichnet,**
**dass** die Bremsscheibe (32) wenigstens einen Vorsprung aufweist, welcher in einer Vertiefung (33) des Gehäuses aufgenommen ist, insbesondere formschlüssig und/oder kraftschlüssig aufgenommen ist.

5. Rollenvorrichtung nach einem der Ansprüche 2, 3 oder 4, **dadurch gekennzeichnet,**
**dass** die Bremsscheibe (32) wenigstens eine Aussparung aufweist in welcher ein zugeordneter Vorsprung des Gehäuses (12) aufgenommen ist, insbesondere formschlüssig, kraftschlüssig und/oder verklebt aufgenommen ist.

6. Rollenvorrichtung nach einem der vorstehenden Ansprüche, **dadurch gekennzeichnet,**
**dass** die radial wirkende Bremseinrichtung (35) ein Bremsring (36) ist und vorzugsweise einen möglichst hohen Reibungskoeffizienten zumindest auf der Seite aufweist, mit welcher der Bremsring (36) den Reibkontakt zu der zugeordneten Rolle (9) herstellt.

7. Rollenvorrichtung nach Anspruch 6,
**dadurch gekennzeichnet,**
**dass** der Bremsring (36) in dem Gehäuse (12) befestigt und mit der Außenseite einer Radnabe (20) der Rolle (9) in Reibkontakt ist, wobei in der Radnabenbohrung (20) die Welle (10) aufgenommen ist, wobei die Radnabe (20) insbesondere einen Flansch (25) aufweist, wobei der Bremsring (36) in Reibkontakt mit dem Flansch (25) der Radnabe (20) ist.

8. Rollenvorrichtung nach einem der Ansprüche 6 oder 7, **dadurch gekennzeichnet,**
**dass** der Bremsring (36) wenigstens einen Vorsprung (37) an seinem Außenumfang und/oder wenigstens einen Vorsprung (38) an einer seiner Außenseiten aufweist, wobei der jeweilige Vorsprung (37, 38) in einer Aussparung des Gehäuses (12) aufgenommen ist, insbesondere formschlüssig, kraftschlüssig und/oder darin verklebt aufgenommen ist.

9. Rollenvorrichtung nach einem vorstehenden Ansprüche, **dadurch gekennzeichnet,**
**dass** die axial wirkende Bremseinrichtung (31) und die radial wirkende Bremseinrichtung (35) als eine axial und radial wirkende Bremseinrichtung ausgebildet sind, wobei die axial und radial Bremseinrichtung einen Bremstopf aufweist, welcher mit der Rolle (9) derart verbunden ist, dass der Bremstopf mit der Rolle (9) permanent in axialer und radialer Richtung in Reibkontakt ist zum permanenten Bremsen der Rollenvorrichtung (5) .

10. Rollenvorrichtung nach Anspruch 9,
**dadurch gekennzeichnet,**
**dass** der Bremstopf auf der Radnabe (20) derart angeordnet ist, dass der Bremstopf als radial wirkende Bremseinrichtung einen Reibkontakt zwischen der Außenseite der Radnabe (20) und seinem Innenumfang bereitstellt, und als axiale wirkende Bremseinrichtung einen Reibkontakt zwischen der Stirnseite der Radnabe (20) und seinem Boden bereitstellt.

11. Rollenvorrichtung nach einem der vorstehenden Ansprüche, **dadurch gekennzeichnet,**
**dass** die Rolle (9) mit dem Gehäuse (12) gekoppelt ist mittels einer Rastverbindung zum Verrasten oder Verclipsen von Radnabe (20) und Gehäuse (12).

12. Rollenvorrichtung nach einem der vorstehenden Ansprüche, **dadurch gekennzeichnet,**
**dass** die Rollenvorrichtung (5) eine Befestigungsaufnahme (13) aufweist zum Aufnehmen einer Befestigungseinrichtung (14), insbesondere Bolzen (15), zum Befestigen der Rollenvorrichtung (5) an einem rollbaren Sitz-, Liege und/oder Transportmöbel, insbesondere dass die Befestigungsaufnahme (13) mit dem Gehäuse (12) durch wenigstens eine zusätzliche Verstärkungsrippe (19) verbunden ist.

13. Rollbares Sitz-, Liege- und/oder Transportmöbel (1) mit wenigstens einer Rollenvorrichtung (5) nach einem der vorstehenden Ansprüche.

14. Sitz-, Liege- und/oder Transportmöbel nach Anspruch 13, **dadurch gekennzeichnet,**
**dass** das rollbare Sitz-, Liege und/oder Transportmöbel ein Stuhl, insbesondere ein Hochstuhl (1), ein Sessel, ein Sofa, ein Bett, insbesondere ein ausziehbares Bett, eine Lager- und Transportpalette, ein Rollgestell, ein Rollwagen oder ein rollbarer Kleiderständer ist.

## Claims

1. Permanently braked rolling device (5) for a piece of seating furniture, lounge furniture and/or transporting furniture (1) that may roll, in particular a chair, wherein the rolling device comprises:
two rollers (9) that are connected to one another via a common shaft (10), wherein the respective roller (9) comprises a wheel hub (20),
a housing (12) having a bearing bush (11) in which the shaft is mounted in a rotatable manner, wherein an axially-acting braking device (31) and/or a radially acting braking device (35) is fastened to the housing (12) and is in permanent frictional contact with the roller (9) so as to permanently brake the rolling device (5), wherein the housing (12) comprises a roller receiving arrangement (26) having at least one latching section (28), wherein the wheel hub (20) may be latched into or clipped into the roller receiving arrangement (26) on the at least one latching section (28).

2. Rolling device according to claim 1,
**characterized in that**
the axially-acting braking device (31) is a brake disc (32), wherein the brake disc is a brake disc that is configured from metal and/or synthetic material, wherein the brake disc is configured from synthetic material in particular an elastomer resilient element, or wherein the axially-acting braking device (31) is at least one spring washer (40), in particular a curved or corrugated spring washer.

3. Rolling device according to claim 2,
**characterized in that**
the brake disc (32) is fastened to the housing (12) by means of an adhesive layer (34), by means of a positive locking connection and/or a non-positive locking connection, in particular by means of being pressed in, in at least one depression (33) in the housing (12).

4. Rolling device according to any one of claims 2 or 3, **characterized in that**
the brake disc (32) comprises at least one projection that is received in a depression (33) of the housing, in particular in a positive locking and/or non-positive locking manner.

5. Rolling device according to any one of claims 2, 3 or 4, **characterized in that**
the brake disc (32) comprises at least one recess in which an allocated projection of the housing (12) is received, in particular in a positive locking manner, non-positive locking manner and/or adhesive manner.

6. Rolling device according to any one of the preceding claims,
**characterized in that**
the radially-acting braking device (35) is a brake ring (36) and preferably comprises a high as possible frictional coefficient at least on the face with which the brake ring (36) produces the frictional contact to the allocated roller (9).

7. Rolling device according to claim 6,
**characterized in that**
the brake ring (36) is fastened in the housing (12) and is in frictional contact with the outer face of a wheel hub (20) of the roller (9), wherein the shaft (10) is received in the wheel hub bore (20), wherein the wheel hub (20) comprises in particular a flange (25), wherein the brake ring (36) is in frictional contact with the flange (25) of the wheel hub (20).

8. Rolling device according to any one of the claims 6 or 7, **characterised in that**
the brake ring (36) comprises at least one projection (37) on the outer circumference of said brake ring and/or at least one projection (38) on one of the outer faces of said brake ring, wherein the respective projection (37, 38) is received in a recess of the housing (12), in particular in a positive locking manner, non-positive locking manner and/or is adhered therein.

9. Rolling device according to any one of the preceding claims,
**characterised in that**
the axially-acting braking device (31) and the radially-acting braking device (35) are configured as an axially-acting and radially-acting braking device, wherein the axially-acting and radially-acting braking device comprises a brake cover that is connected to the roller (9) in such a manner that the brake cover is permanently in frictional contact in the axial and radial direction with the roller (9) so as to permanently brake the rolling device (5).

10. Rolling device according to claim 9,
**characterised in that**
the brake cover is arranged on the wheel hub (20) in such a manner that the brake cover as a radially-acting braking device provides a frictional contact between the outer face of the wheel hub (20) and the inner circumference of said brake cover, and as an axially-acting braking device provides a frictional contact between the end face of the wheel hub (20) and the base of said brake cover.

11. Rolling device according to any one of the preceding claims,
**characterised in that**
the roller (9) is coupled to the housing (12) by means of a latching connection so as to latch or clip the wheel hub (20) and housing (12).

12. Rolling device according to any one of the preceding claims,
**characterized in that**
the rolling device (5) comprises a fastening receiving arrangement (13) for receiving a fastening device (14), in particular bolts (15), for fastening the rolling device (5) to a piece of seating furniture, lounge furniture and/or transporting furniture that may roll, in particular that the fastening receiving arrangement (13) is connected to the housing (12) by means of at least one additional reinforcing rib (19).

13. Piece of seating furniture, lounge furniture and/or transporting furniture (1) that may roll having at least one rolling device (5) according to any one of the preceding claims.

14. Piece of seating furniture, lounge furniture and/or transporting furniture according to claim 13,
**characterised in that**
the piece of seating furniture, lounge furniture and/or transporting furniture that may roll is a chair, in particular a high chair (1), an armchair, a sofa, a bed, in particular a pull-out bed, a storage pallet and transporting pallet, a rolling frame, a trolley or a clothes stand that may roll.

## Revendications

1. Dispositif à roulettes (5) freiné en permanence, pour un siège, une chaise longue et/ou un meuble transportable (1) sur roulettes, notamment une chaise, le dispositif à roulettes présentant :
deux galets (9) qui sont reliés entre eux par l'intermédiaire d'un arbre (10) commun, le galet (9) respectif présentant un moyeu de roue (20),
un boîtier (12) doté d'une douille de palier (11), dans lequel l'arbre est monté de manière rotative, un moyen de freinage (31) agissant axialement et/ou un moyen de freinage (35) agissant radialement étant fixés sur le boîtier (12) et étant en permanence en contact de friction avec le galet (9) pour le freinage permanent du dispositif à roulettes (5), le boîtier (12) présentant un logement de galet (26) muni d'au moins une section d'enclenchement (28), le moyeu de roue (20) sur l'au moins une section d'enclenchement (28) pouvant être enclenché ou encliqueté dans le logement de galet (26).

2. Dispositif à roulettes selon la revendication 1,
**caractérisé en ce**
**que** le moyen de freinage (31) agissant axialement est un disque de frein (32), le disque de frein étant un disque de frein en métal et/ou en matière plastique, le disque de frein en matière plastique étant notamment un ressort élastomère, ou **en ce que** le moyen de freinage (31) agissant axialement (31) est au moins une rondelle élastique (40), notamment une rondelle élastique bombée ou ondulée.

3. Dispositif à roulettes selon la revendication 2,
**caractérisé en ce**
**que** le disque de frein (32) est fixé sur le boîtier (12) au moyen d'une couche de colle (34) par adhérence de forme et/ou de force, notamment par pressage dans au moins un creux (33) situé dans le boîtier (12).

4. Dispositif à roulettes selon l'une quelconque des revendications 2 ou 3,
**caractérisé en ce**
**que** le disque de frein (32) présente au moins une saillie qui est logée dans un creux (33) du boîtier, notamment par adhérence de forme et/ou de force.

5. Dispositif à roulettes selon l'une quelconque des revendications 2, 3 ou 4,
**caractérisé en ce**
**que** le disque de frein (32) présente au moins un évidement dans lequel une saillie correspondante du boîtier (12) est logée, notamment par adhérence de forme, par adhérence de force et/ou de manière collée.

6. Dispositif à roulettes selon l'une quelconque des revendications précédentes,
**caractérisé en ce**
**que** le moyen de freinage (35) agissant radialement est une jante de freinage (36) et présente de préférence un coefficient de friction le plus élevé possible au moins sur le côté avec lequel la jante de freinage (36) établit le contact de friction par rapport au galet (9) correspondant.

7. Dispositif à roulettes selon la revendication 6,
**caractérisé en ce**
**que** la jante de freinage (36) est fixée dans le boîtier (12) et est en contact de friction avec le côté extérieur d'un moyeu de roue (20) du galet (9), l'arbre (10) étant logé dans l'alésage de moyeu de roue (20), le moyeu de roue (20) présentant notamment une bride (25), la jante de freinage (36) étant en contact de friction avec la bride (25) du moyeu de roue (20).

8. Dispositif à roulettes selon l'une quelconque des revendications 6 ou 7,
**caractérisé en ce**
**que** la jante de freinage (36) présente au moins une saillie (37) sur sa circonférence extérieure et/ou au moins une saillie (38) sur l'un de ses côtés extérieurs, la saillie respective (37, 38) étant logée dans un évidement du boîtier (12), notamment par adhérence de forme, par adhérence de force et/ou en y étant collée.

9. Dispositif à roulettes selon l'une quelconque des revendications précédentes,
**caractérisé en ce**
**que** le moyen de freinage (31) agissant axialement et le moyen de freinage (35) agissant radialement sont réalisés comme un moyen de freinage agissant axialement et radialement, le moyen de freinage agissant axialement et radialement présentant un pot de freinage qui est relié au galet (9) de manière à ce que le pot de freinage soit en permanence en contact de friction avec le galet (9) en direction axiale et radiale pour le freinage permanent du dispositif à roulettes (5).

10. Dispositif à roulettes selon la revendication 9,
**caractérisé en ce**
**que** le pot de freinage est disposé sur le moyeu de roue (20) de manière à ce que le pot de freinage, en tant que moyen de freinage agissant radialement, fournisse un contact de friction entre le côté extérieur du moyeu de roue (20) et sa circonférence extérieure, et que, en tant que moyen de freinage agissant axialement, il fournisse un contact de friction entre le côté frontal du moyeu de roue (20) et son fond.

11. Dispositif à roulettes selon l'une quelconque des revendications précédentes,
**caractérisé en ce**
**que** le galet (9) est couplé au boîtier (12) au moyen d'une liaison d'enclenchement destinée à l'enclenchement ou au clipsage du moyeu de roue (20) et du boîtier (12) .

12. Dispositif à roulettes selon l'une quelconque des revendications précédentes,
**caractérisé en ce**
**que** le dispositif à roulettes (5) présente un logement de fixation (13) destiné à loger un moyen de fixation (14), notamment un boulon (15), pour fixer le dispositif à roulettes (5) sur un siège, une chaise longue et/ou un meuble transportable sur roulettes, notamment **en ce que** le moyen de fixation (13) est relié au boîtier (12) au moyen d'au moins une nervure de renforcement (19) supplémentaire.

13. Siège, chaise longue et/ou meuble transportable (1) sur roulettes comprenant au moins un dispositif à roulettes (5) selon l'une quelconque des revendications précédentes.

14. Siège, chaise longue et/ou meuble transportable selon la revendication 13,
**caractérisé en ce**
**que** le siège, la chaise longue et/ou le meuble transportable sont notamment une chaise haute (1), un fauteuil, un canapé, un lit, notamment un lit gigogne, une palette de stockage et une palette de transport, un châssis sur roulettes, un chariot ou un portemanteau roulant.
